# EUROPEAN PATENT SPECIFICATION

(11) **EP 1 714 254 B1**
(45) Date of publication and mention of the grant of the patent: **05.12.2007**
(21) Application number: 05702605.6
(22) Date of filing: 06.01.2005
(51) Int. Cl.: G06T 11/00, G06T 5/00

(54) **WINDMILL ARTIFACT REDUCTION IN MULTI-SLICE CT RECONSTRUCTION**
WINDMÜHLEN-ARTEFAKTREDUKTION BEI DER MEHRSCHICHT-CT-REKONSTRUKTION
REDUCTION D'ARTEFACT EN FORME D'EOLIENNE DANS LA RECONSTRUCTION TOMOGRAPHIQUE MULTICOUPE

(30) Priority: 29.01.2004 US 540280 P
(43) Date of publication of application: 25.10.2006
(73) Proprietor: Koninklijke Philips Electronics N.V., 5621 BA Eindhoven (NL)
(72) Inventor: SHECHTER, Gilad, NL-5621 BA Eindhoven (NL)
(74) Representative: Volmer, Georg
(86) International application number: PCT/IB2005/050081
(87) International publication number: WO 2005/073922

(56) References cited:
- SILVER M ET AL: "Windmill artifact in multi-slice helical CT" PROCEEDINGS OF THE SPIE - THE INTERNATIONAL SOCIETY FOR OPTICAL ENGINEERING SPIE-INT. SOC. OPT. ENG USA, vol. 5032, 17 February 2003 (2003-02-17), - 20 February 2003 (2003-02-20) pages 1918-1927, XP002320834 ISSN: 0277-786X
- KÖHLER TH ET AL: "Artifact analysis of approximate helical cone-beam CT reconstruction algorithms" MEDICAL PHYSICS, AMERICAN INSTITUTE OF PHYSICS. NEW YORK, US, vol. 29, no. 1, January 2002 (2002-01), pages 51-64, XP012011600 ISSN: 0094-2405
- D.J. HEUSCHER ET AL: "Conebeam multi-slice CT: sampling in the z-dimension" RADIOLOGY, vol. 225P, 4 December 2002 (2002-12-04), page 194, XP009045107

## Description

The present invention relates to the diagnostic imaging arts. It finds particular application in conjunction with reducing artifacts in images from multi-slice or spiral CT scans in which data has been undersampled in a z-or axial direction and will be described with particular reference thereto. However, it is to be appreciated that the invention is also applicable in the reduction of windmill artifacts in other image reconstructions.

When data is undersampled, e.g., the Nyquist requirements are not satisfied, artifacts tend to occur. In CT scanners which rotate about an axis of rotation, undersampling artifacts along this axis can manifest themselves as windmill artifacts. Windmill artifacts are alternating light and dark generally triangular regions which radiate outward from a common point similar to the vanes of a windmill. Windmill artifacts can be found radiating from one or more regions of an image, which regions are typically not concentric with the axis of rotation.

Other artifacts originating due to in-plane undersampling, e.g., in x- and y-directions, can be resolved using a dual focal spot x-ray tubes and a quarter detector offset technique. The quarter detector offset increases the amount of data collected which, in most cases, causes the Nyquist conditions to be met. However, the quarter detector offset techniques do not resolve undersampling in the axial or z-direction.

One solution for reducing windmill artifacts due to axial undersampling has been to use artifact reduction filtering. That is, the data or the resultant image is smoothed or smeared in the axial direction reducing windmill artifacts, but at the cost of reducing resolution.

The article "Windmill artifact in multi-slice helical CT" by Michael Silver et al., Proceedings of SPIE, Vol. 5032 (2003), pages 1918-1927, XP-002320834, ISSN: 0277-78X investigates the generation of windmill artifacts. The traces of selected voxels through a multi-slice detector array as a function of view position is followed, wherein this forms an "extracted sinogram" which represents the data used to reconstruct that specific voxel. In order to determine the cause of the artifact windmill streaks in the image are correlated with the extracted data.

Thomas Köhler et al. disclose in "Artifact analysis of approximate helical cone-beam CT reconstruction", Medical Physics, American Institute of Physics New York, US, Vol. 29, No. 1, January 2002, pases 51-64, XP0120116000 ISSN: 0094-2405, a comparison of four approximate cone-beam CT reconstruction algorithms: Advanced single slice rebinning (ASSR) as a representative of algorithms employing a two dimensional approximation, PI, PI-SLANT, and 3-PI which all use a proper three dimensional back-projection. This article shows that aliasing in the z-direction is the predominant source of artifacts for a 16-row scanner with 1.25 mm nominal slice thickness. For a detector with isotropic resolution of 0.5 mm, it has been found that ASSR and PI produce different kinds of artifacts which are almost at the same level while PI-SLANT produces none of these artefacts. The article shows further that the use of redundant data in the 3-PI method suppresses aliasing artifacts efficiently.

D.J. Heutscher et al. disclose in "Conebeam multi-slice CT: sampling in the z-dimension", Radiology, Vol. 225P, 4 December 2002, page 194, XP009045107, a demonstration of effects on image quality due to the distribution of conebeam projection sampling along the z-dimension and describe methods to eliminate or reduce both aliasing and non-uniformity in z-resolution. Z-dimension sampling effects including aliasing and non-uniform z-resolution are demonstrated using simulated as well as clinical data from a 16-row multislice system. True 3D helical conebeam reconstructions are performed and radially-dependent filters in the z-dimension are used to correct for resolution non-uniformity. In addition, interlaced sampling along the z-axis is performed to illustrate how the aliasing effects can be eliminated. Both simulated and clinical data illustrate the undesirable effects of limited sampling along the z-dimension manifested by aliasing patterns of high contrast structures SSP (slice sensitivity profile) measurements demonstrate a non-uniform distribution of z-axis resolution in these conebeam scans. The same data processed with radially-dependent filters achieve more uniform SSP measurements, while interlacing samples alone the z-axis eliminates the aliasing patterns without compromising z-axis resolution Thus, the article discloses that intrinsic spatial variation in z-resolution found in conebeam multi-slice CT systems can be reduced via radially dependent filtration. In addition, aliasing patterns caused by limited z-axis sampling can be eliminated using interlaced sampling in the z-dimension without sacrificing, z-axis resolution.

In another solution proposed by Hsieh in "Adaptive Interpolation Approach for Multi-slice Helical CT reconstruction", proceedings of SPLE, Vol. 5032 (2003), pages 1876-1883 each ray of data is convolved in parallel with a high-pass filter or sharp Gaussian which tended to generate high resolution slice profiles and a low-pass filter or flat Gaussian, which tended to smear the data in the z-direction. The high- and low-pass filtered versions of the same data line were compared to determine the difference between them. If the difference was small, Hsieh took this as an indication that the data was good and used the data convolved with the high-pass filter. If the difference was large, Hsieh assumed that the data was noisy and used the data line convolved with the low-pass filter. Intermediately between large and small differences, each data line was replaced by an appropriately weighted average of the high- and low-pass filtered version of the same data line.

The Hsieh technique worked well in regions where there were small features with similar contrast, such as in the lungs. However, in the brain, where there are regions of sharp contrast in narrowly defined areas, there were still windmill artifact problems.

The present invention overcomes the above-referenced problems and others.

In accordance with one aspect of the present invention, a volumetric imaging system as defined in claim 1 is provided.

In accordance with another aspect of the present invention, a volumetric imaging method as defined in claim 11 is provided.

Preferred embodiments of the invention are defined in the dependent claims.

One advantage of the present invention resides in improved image resolution and quality.

Another advantage of this invention resides in image processing efficiency. Another advantage of this invention resides in a reduction of windmill artifacts while maintaining resolution.

Still further advantages of the present invention will be appreciated to those of ordinary skill in the art upon reading and understand the following detailed description.

The invention may take form in various components and arrangements of components, and in various steps and arrangements of steps. The drawings are only for purposes of illustrating the preferred embodiments and are not to be construed as limiting the invention.

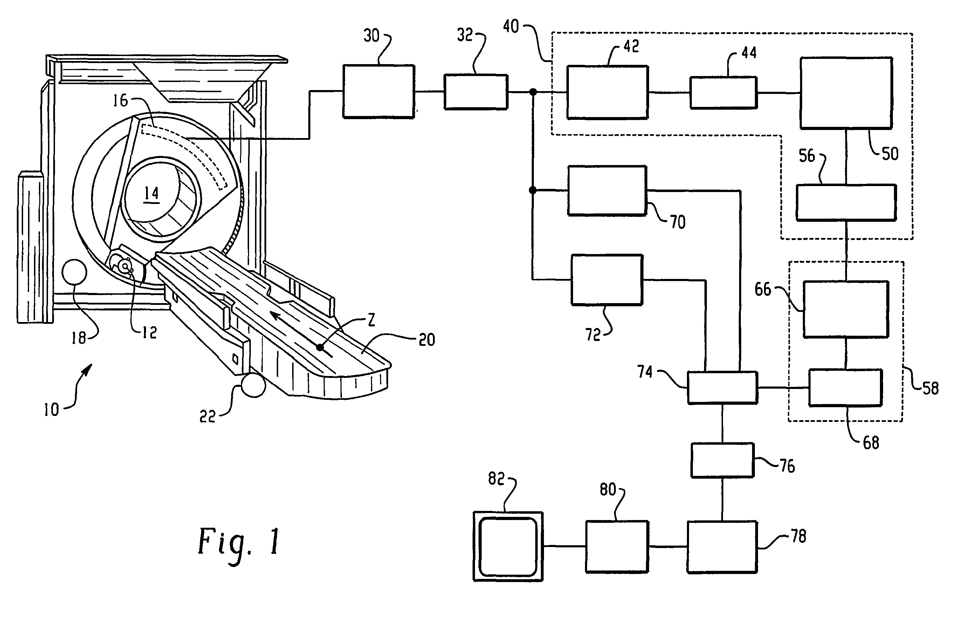

- FIGURE 1: is a diagrammatic illustration of a diagnostic imaging system in accordance with the present invention;
- FIGURE 2: is illustrative of an exemplary "image" of windmill artifact centers; and,
- FIGURE 3: is illustrative of an exemplary convolution function for combining corresponding sharpened and smoothed image data values.

A diagnostic imaging apparatus 10, preferably a wedge or cone-beam CT scanner, generates diagnostic image data which is subject to windmill artifacts. The scanner includes an x-ray source **12** which is collimated to project a wedge or cone-shaped beam across an imaging region **14** to a two-dimensional x-ray detector **16.** The x-ray detector **16** includes a two-dimensional array of pixels, each of which produces an output signal which corresponds to the intensity of radiation which has traversed a ray from the x-ray source through the examination region to the detector element. By comparing the received radiation intensity with a reference signal indicative of the intensity of radiation which has not been attenuated by a subject in the examination region, the data can be converted to an indication of the amount of radiation attenuation along the corresponding ray. A motor **18** and an associated drive or other such means are provided for rotating the x-ray beam around the examination region.

A subject in the examination region is supported on a patient support or couch **20.** An electric motor **22** and associated gearing or chains advances the subject axially through the examination region. By advancing the subject continuously as the x-ray beam rotates, a spiral scanning trajectory is achieved. Alternately, by intermittently stepping the subject along the axial direction and then pausing, a series of parallel slices can be generated. As yet another alternative, the x-ray source and detectors move axially relative to a stationary subject.

The data indicative of the intensity of radiation received along each ray or the radiation attenuation along each ray and an identification of the ray, typically in terms of a rotational position of the x-ray source, an angular rotation of each ray relative to the x-ray source in both the rotational and longitudinal direction, and a longitudinal or axial displacement along the axis of rotation is supplied to a data buffer **30.** In the preferred embodiment, the data is re-binned by a re-binning processor or means **32** into a set of parallel projections for three-dimensional backprojection using the three-dimensional image reconstruction technique described by Tuy in U.S. Patent No. 6,104,775. Of course, other reconstruction techniques, as are known in the art, are also contemplated.

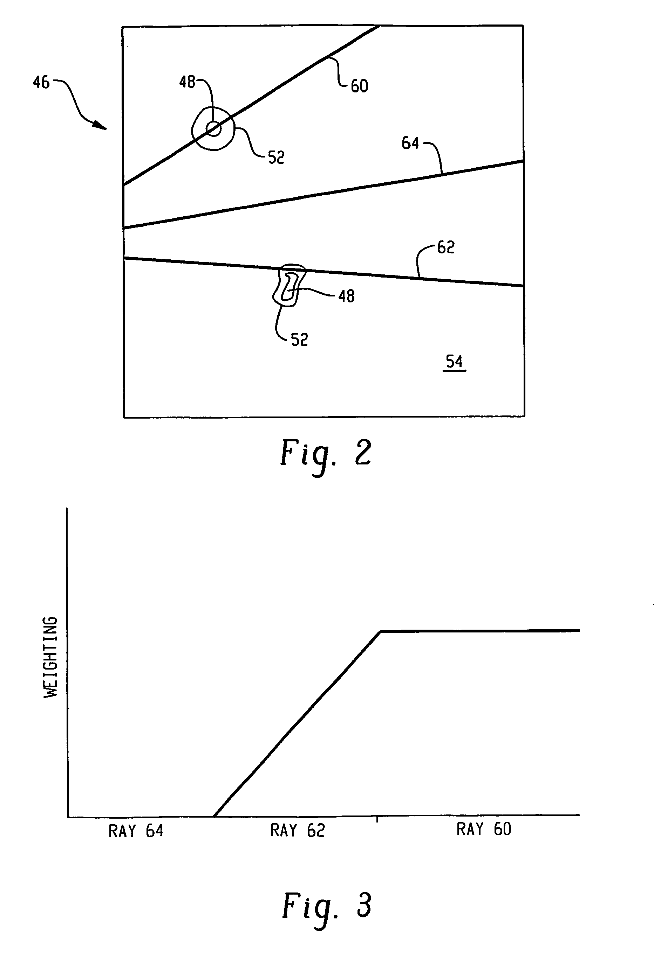

A means **40** for finding windmill artifact centers determines which data represent rays which pass through a windmill artifact center. In the preferred embodiment, this includes a high-pass filter **42** which high-pass filters the data relative to the axial or z-direction. A reconstruction processor **44** reconstructs the high-pass filtered data into an image representation **46** (FIGURE 2) of the radiation centers **48** of the windmill artifacts which is stored in an artifact center memory **50.** By appropriately high-pass filtering the data, the reconstructed image will represent only the regions from which the windmill artifacts appear to radiate. This image appears as a series of spots **48** of one color extreme (black or white) representing the radiation centers surrounded by an intermediate gray scale region or penumbra **52** on a field **54** which is of the other color extreme. Preferably, a processor **56** normalizes or scales the artifact center image representation.

A means **58** determines which rays **60** pass through one of the windmill artifact radiation centers, which rays pass through the penumbra **52,** and which rays **64** miss the centers and the penumbrae. More specifically to the preferred embodiment, this determination is made by a forward-projection processor **66** forward projects the normalized artifact center image into a forward projection memory **68.** The gray scale value or magnitude of each forward projected ray indicates if the ray is at the corresponding angle and position within the parallel projection pass through a center **48,** a penumbra **52,** or neither.

Each of the re-binned data values is also passed, in parallel, through a slice sharpening filter **70,** which sharpens resolution in the axial direction and through a smoothing filter 72 such as a low-pass filter, which smooths or smears the resolution in the axial direction. Of course, the filtering can also be applied in the in-plane direction. A data selecting or weighting processor or means **74,** from the magnitude of the data value from the forward projected data memory **68** selects either the sharpened data value, the smoothed data value, or a weighted average of the two. With reference to FIGURE 3, if the magnitude of the corresponding forward-projected data value indicates that the data value does not represent a ray **64** which passes through one of the artifact centers, the data value which has been subject to the sharpening filter is passed to a reconstruction processor **76.** If the ray **60** passes through one of the artifact centers, then the data value from the smoothing filter **72** is passed to the reconstruction processor. If the ray **62** corresponding to the data value passes weakly through one of the artifact centers **48,** such as passing through or adjacent to an edge of one of the artifact centers **48,** then a weighted average of the sharpened and smoothed data value is passed to the reconstruction processor **76.**

The data values are backprojected or otherwise reconstructed into a three-dimensional final image memory **78.** A video processor **80** withdraws selected slices, projections, surface renderings, or other selected portions of the three-dimensional volumetric image representation and converts them into appropriate format for display on a monitor **82.**

In the preferred embodiment, the means **74** for selecting and weighting the sharpened and smoothed data values weights the sharpened and slice smoothed data values with a function, such as the ramp function of FIGURE 3, that, as described above, passes the sharpened data when the ray does not pass through an artifact center which passes the smoothed data value when the corresponding ray passes through an artifact center, and which passes the weighted average when the ray passes weakly through the artifact center.

The invention has been described with reference to the preferred embodiments. Modifications and alterations may occur to others upon reading and understanding the preceding detailed description. It is intended that the invention be constructed as including all such modifications and alterations insofar as they come within the scope of the appended claims or the equivalents thereof.

## Claims

1. A volumetric imaging apparatus comprising:
a means (10) for generating diagnostic projection data of a subject portion in an examination region (14) which is potentially subject to windmill artifacts;
a means (40) for determining windmill artifact radiation centers (48) from which the windmill artifacts appear to radiate;
a means (58) for determining which rays (60) pass through the windmill artifact radiation centers,
a means (70) for filtering the projection data with a sharpening filter;
a means (72) for filtering the projection data with a smoothing filter;
a means (74) for selectively weighting the data filtered with the sharpening filter and the data filtered with the smoothing filter in accordance with a trajectory of a ray corresponding to the data through a region of interest relative to the determined windmill artifact radiation centers; and
a means (76) for reconstructing the weighted data into an image representation.

2. The apparatus according to claim 1, wherein the projection data generating means (10) includes aCT scanner which includes an x-ray source (12) for generating a wedge or cone-beam of radiation and a two-dimensional detector (16) for generating CT data.

3. The apparatus according to claim 2 further including:
a means (32) for re-binning data from the two-dimensional radiation detector (16) into parallel projection data, the sharpening filtering means (70), and the smoothing filtering means (72) both filtering each ray of the parallel projection data.

4. The apparatus according to claim 3, wherein the sharpening and smoothing filtering means (60, 62) filter in a direction parallel to an axis of rotation of the CT scanner.

5. The apparatus according to claim 2, wherein the means (40) for identifying the windmill artifact radiation centers includes:
a high-pass filter (42) for filtering the diagnostic projection data;
a reconstruction means (44) for reconstructing the high-pass filtered data into an windmill artifact center image representation (46) depicting windmill artifact radiation centers (48).

6. The apparatus according to claim 5, wherein the means (40) for identifying the centers of the windmill artifacts further includes:
a normalizing means (56) for normalizing the windmill artifact center image representation.

7. The apparatus according to claim 5, further including:
a forward projecting means (52) for forward projecting the windmill artifact center image (46) into data values corresponding to ray trajectories, the magnitude of the data value corresponding to each ray trajectory being indicative whether a ray along the corresponding trajectory passes through one of the windmill artifact radiation centers (48) of the windmill artifact center image representation (46).

8. The apparatus according to claim 5, wherein the windmill artifact center image representation (46) represents: windmill artifact radiation centers (48), penumbras (52) surrounding windmill artifact centers, and a background field (54).

9. The apparatus according to claim 8, wherein the weighting means (74):
passes data from the smoothing filter means (72) directly to the reconstruction means (76) for data corresponding to trajectories which pass through one of the radiation centers,
passes a weighted average of data from the sharpening and smoothing filtering means (70,72) to the reconstruction means (76) for trajectories which pass weakly through one of the radiation centers; and
passes data from the sharpening filter means (70) directly to the reconstruction means (76) for rays (64) which pass only through a field (54) and not through a center.

10. The apparatus according to claim 1, wherein the apparatus is an apparatus for reconstructing diagnostic images, wherein the means for generating diagnostic projection data is a wedge or cone-beam CT scanner (10) which generates a set of projection data values indicative of radiation transmission or attenuation along radiation rays which diverge in rotational and axial directions;
wherein the means (40) for determining windmill artifact radiation centers (48) from which the windmill artifacts appear to radiate is a processor (40) which reconstructs the projection data values into an image representation (46) indicative of center points (48) of windmill artifacts;
wherein the means (70) for filtering the projection data with a sharpening filter is a resolution enhancing filter (70) and wherein the means (72) for filtering the projection data with a smoothing filter is a resolution smearing filter (72), wherein the resolution enhancing filter (70) and the resolution smearing filter (72) each filter each projection data value in parallel to generate a resolution enhanced data value and a resolution reduced data value;
wherein the means for selectively weighting the data filtered with the sharpening filter and the data filtered with the smoothing filter in accordance with a trajectory of a ray corresponding to the data through the region of interest relative to the determined windmill artifact centers is a weighting processor (74) for selectively combining the resolution enhanced projection data value and the resolution reduced projection data value corresponding to a common ray in accordance with a trajectory of the common ray relative to the windmill artifact radiation centers; and
wherein the means for reconstructing the weighted data into an image representation is a reconstruction processor (76) which reconstructs the weighted projection data values into a three-dimensional diagnostic image representation.

11. A volumetric imaging method comprising:
generating diagnostic projection data which is potentially subject to windmill artifacts;
determining windmill artifact radiation centers (48) from which the windmill artifacts appear to radiate;
determining which rays (60) pass through the windmill artifact radiation centers, filtering the projection data with a sharpening filter;
filtering the projection data with a smoothing filter;
selectively weighting the data filtered with the sharpening filter and the data filtered with the smoothing filter in accordance with a trajectory of a ray corresponding to the data through a region of interest relative to the determined windmill artifact radiation centers (48); and
reconstructing the weighted data into an image representation.

12. The method according to claim 11, wherein the projection data is generated by a CT scanner and further including:
re-binning data from the CT scanner into parallel projection data, and filtering the parallel projection data with the sharpening and the smoothing filters.

13. The method according to claim 12, wherein the sharpening and smoothing filters filter in a direction parallel to an axis of rotation of the CT scanner.

14. The method according to claim 12, wherein the windmill artifact radiation centers identifying includes:
high-pass filtering the re-binned projection data;
reconstructing the high-pass filtered data into an image representation depicting windmill artifact radiation centers.

15. The method according to claim 14, further including:
normalizing the windmill center image representation.

16. The method according to claim 14, further including:
forward projecting the windmill artifact center image into data values corresponding to ray trajectories, the magnitude of the data value corresponding to each ray trajectory being indicative whether a ray along the corresponding trajectory passes through one of the windmill artifact radiation centers (48) of the windmill artifact center image representation (46).

17. The method according to claim 14, wherein the windmill artifact center image (46) represents: windmill artifact radiation centers (48), penumbras (52) surrounding windmill artifact radiation centers, and a background field (54).

18. The method according to claim 17, wherein the weighting step includes:
weighted averaging the sharpening filtered projection data and smoothing filtered projection data in accordance with whether the ray passes through the windmill artifact radiation center (48), the penumbra (52), or the field (54).

19. The method according to claim 18 wherein the weighted averaging step includes:
weighting the data which has been filtered with the sharpening filter and the data which has been filtered with the smoothing filter with a ramp function.

## Patentansprüche

1. Volumenbildgebungsgerät, das Folgendes umfasst:
ein Mittel (10) zum Erzeugen diagnostischer Projektionsdaten eines in einer Untersuchungsregion (14) befindlichen Objektteils, die möglicherweise Windmühlenartefakten unterliegen;
ein Mittel (40) zum Ermitteln von Windmühlenartefaktstrahlungszentren (48), von denen die Windmühlenartefakte auszustrahlen scheinen;
ein Mittel (58) zum Ermitteln, welche Strahlengänge (60) durch die Windmühlenartefaktstrahlungszentren verlaufen;
ein Mittel (70) zum Filtern der Projektionsdaten mit einem Schärfungsfilter;
ein Mittel (72) zum Filtern der Projektionsdaten mit einem Glättungsfilter;
ein Mittel (74) zum selektiven Gewichten der mit dem Schärfungsfilter gefilterten Daten und der mit dem Glättungsfilter gefilterten Daten gemäß einer Trajektorie eines den Daten entsprechenden Strahlengangs durch eine interessierende Region relativ zu den ermittelten Windmühlenartefaktstrahlungszentren; und
ein Mittel (76) zum Rekonstruieren der gewichteten Daten zu einer Bilddarstellung.

2. Gerät nach Anspruch 1, wobei das die Projektionsdaten erzeugende Mittel (10) einen CT-Scanner umfasst, der eine Röntgenquelle (12) zum Erzeugen eines keil- oder kegelförmigen Strahlenbündels und einen zweidimensionalen Detektor (16) zum Erzeugen der CT-Daten umfasst.

3. Gerät nach Anspruch 2, das weiterhin Folgendes umfasst:
ein Mittel (32) zum Rebinning der Daten aus dem zweidimensionalen Strahlungsdetektor (16) zu parallelen Projektionsdaten, wobei sowohl das Schärfungsfilterungsmittel (70) als auch das Glättungsfilterungsmittel (72) jeden Strahlengang der parallelen Projektionsdaten filtern.

4. Gerät nach Anspruch 3, wobei das Schärfungsfilterungsmittel und das Glättungsfilterungsmittel (60, 62) die Filterung in einer Richtung parallel zu einer Rotationsachse des CT-Scanners durchführen.

5. Gerät nach Anspruch 2, wobei das Mittel (40) zum Identifizieren der Windmühlenartefaktstrahlungszentren Folgendes umfasst:
einen Hochpassfilter (42) zum Filtern der diagnostischen Projektionsdaten;
ein Rekonstruktionsmittel (44) zum Rekonstruieren der mit dem Hochpassfilter gefilterten Daten zu einer Bilddarstellung (46) der Windmühlenartefaktzentren, die die Windmühlenartefaktstrahlungszentren (48) darstellt.

6. Gerät nach Anspruch 5, wobei das Mittel (40) zum Identifizieren der Zentren der Windmühlenartefakte Folgendes umfasst:
ein Normalisierungsmittel (56) zum Normalisieren der Bilddarstellung der Windmühlenartefaktzentren.

7. Gerät nach Anspruch 5, das weiterhin Folgendes umfasst:
ein Vorwärtsprojektionsmittel (52) zum Vorwärtsprojizieren des Windmühlenartefaktzentrum-Bildes (46) in Datenwerte, die den Strahlengang-Trajektorien entsprechen, wobei die Magnitude des der jeweiligen Strahlengang-Trajektorie entsprechenden Datenwertes darauf hinweist, ob ein Strahlengang auf der entsprechenden Trajektorie durch eines der Windmühlenartefaktstrahlungszentren (48) der Bilddarstellung der Windmühlenartefaktzentren verläuft.

8. Gerät nach Anspruch 5, wobei die Bilddarstellung (46) der Windmühlenartefaktzentren Folgendes darstellt: Windmühlenartefaktstrahlungszentren (48), die die Windmühlenartefaktzentren umgebenden Halbschatten (52) und ein Hintergrundfeld (54).

9. Gerät nach Anspruch 8, wobei das Gewichtungsmittel (74):
bei Daten, welche den durch eines der Strahlungszentren verlaufenden Trajektorien entsprechen, die Daten von dem Glättungsfiltermittel (72) direkt an das Rekonstruktionsmittel (76) weiterleitet,
bei Trajektorien, die knapp durch eines der Strahlungszentren verlaufen, einen gewichteten Mittelwert der Daten von dem Schärfungsfilterungsmittel und dem Glättungsfilterungsmittel (70, 72) an das Rekonstruktionsmittel (76) weiterleitet, und
bei Strahlengängen (64), die nur durch ein Feld (54) und nicht durch ein Zentrum verlaufen, die Daten von dem Schärfungsfilterungsmittel (70) direkt an das Rekonstruktionsmittel (76) weiterleitet.

10. Gerät nach Anspruch 1, wobei das Gerät ein Gerät zum Rekonstruieren von Diagnosebildern ist, wobei das Mittel zum Erzeugen von diagnostischen Projektionsdaten ein CT-Scanner (10) mit keil- oder kegelförmigem Strahlenbündel ist, der eine Reihe von Projektionsdatenwerten erzeugt, die auf die Strahlungstransmission oder -abschwächung auf Strahlengängen hinweisen, die in Rotationsrichtung und axialer Richtung divergieren;
wobei das Mittel (40) zum Ermitteln der Windmühlenartefaktstrahlungszentren (48), von denen die Windmühlenartefakte auszustrahlen scheinen, ein Prozessor (40) ist, der die Projektionsdatenwerte zu einer Bilddarstellung (46) rekonstruiert, die die Mittelpunkte (48) der Windmühlenartefakte angibt;
wobei das Mittel (70) zum Filtern der Projektionsdaten mit einem Schärfungsfilter ein die Auflösung verbessernder Filter (70) ist und wobei das Mittel (72) zum Filtern der Projektionsdaten mit einem Glättungsfilter ein die Auflösung verschmierender Filter (72) ist, wobei der die Auflösung verbessernde Filter (70) und der die Auflösung verschmierende Filter (72) jeweils jeden Projektionsdatenwert parallel filtern, um einen Datenwert mit verbesserter Auflösung und einen Datenwert mit reduzierter Auflösung zu erzeugen;
wobei das Mittel zum selektiven Gewichten der mit dem Schärfungsfilter gefilterten Daten und der mit dem Glättungsfilter gefilterten Daten gemäß einer Trajektorie eines den Daten entsprechenden Strahlengangs durch eine interessierende Region relativ zu den ermittelten Windmühlenartefaktstrahlungszentren ein Gewichtungsprozessor (74) zum selektiven Kombinieren der einem gemeinsamen Strahlengang entsprechenden Projektionsdatenwerte mit verbesserter Auflösung und der Projektionsdatenwerte mit reduzierter Auflösung gemäß einer Trajektorie des gemeinsamen Strahlengangs relativ zu den Windmühlenartefaktstrahlungszentren ist; und
wobei das Mittel zum Rekonstruieren der gewichteten Daten zu einer Bilddarstellung ein Rekonstruktionsprozessor (76) ist, der die gewichteten Projektionsdaten zu einer dreidimensionalen diagnostischen Bilddarstellung rekonstruiert.

11. Volumenbildgebungsverfahren, das Folgendes umfasst:
Erzeugen von diagnostischen Projektionsdaten, die möglicherweise Windmühlenartefakten unterliegen;
Ermitteln von Windmühlenartefaktstrahlungszentren (48), von denen die Windmühlenartefakte auszustrahlen scheinen;
Ermitteln, welche Strahlengänge (60) durch die Windmühlenartefaktstrahlungszentren verlaufen;
Filtern der Projektionsdaten mit einem Schärfungsfilter;
Filtern der Projektionsdaten mit einem Glättungsfilter;
selektives Gewichten der mit dem Schärfungsfilter gefilterten Daten und der mit dem Glättungsfilter gefilterten Daten gemäß einer Trajektorie eines den Daten entsprechenden Strahlengangs durch eine interessierende Region relativ zu den ermittelten Windmühlenartefaktstrahlungszentren (48); und
Rekonstruieren der gewichteten Daten zu einer Bilddarstellung.

12. Verfahren nach Anspruch 11, wobei die Projektionsdaten durch einen CT-Scanner erzeugt werden, und wobei das Verfahren weiterhin Folgendes umfasst:
Rebinning der Daten von dem CT-Scanner zu parallelen Projektionsdaten, und Filtern der parallelen Projektionsdaten mit dem Schärfungsfilter und dem Glättungsfilter.

13. Verfahren nach Anspruch 12, wobei der Schärfungsfilter und der Glättungsfilter die Filterung in einer Richtung parallel zu einer Rotationsachse des CT-Scanners durchführen.

14. Verfahren nach Anspruch 12, wobei das Identifizieren der Windmühlenartefaktstrahlungszentren Folgendes umfasst:
Hochpassfiltern der dem Rebinning unterzogenen Projektionsdaten;
Rekonstruieren der mit dem Hochpassfilter gefilterten Daten zu einer Bilddarstellung, die die Windmühlenartefaktstrahlungszentren darstellt.

15. Verfahren nach Anspruch 14, das weiterhin Folgendes umfasst:
Normalisieren der Bilddarstellung der Windmühlenartefaktzentren.

16. Verfahren nach Anspruch 14, das weiterhin Folgendes umfasst:
Vorwärtsprojizieren des Windmühlenartefaktzentrum-Bildes in Datenwerte, die den Strahlengang-Trajektorien entsprechen, wobei die Magnitude des der jeweiligen Strahlengang-Trajektorie entsprechenden Datenwertes darauf hinweist, ob ein Strahlengang auf der entsprechenden Trajektorie durch eines der Windmühlenartefaktstrahlungszentren (48) der Bilddarstellung (46) der Windmühlenartefaktzentren verläuft.

17. Verfahren nach Anspruch 14, wobei die Bilddarstellung (46) der Windmühlenartefaktzentren Folgendes darstellt: Windmühlenartefaktstrahlungszentren (48), die die Windmühlenartefaktzentren umgebenden Halbschatten (52) und ein Hintergrundfeld (54).

18. Verfahren nach Anspruch 17, wobei der Schritt des Gewichtens Folgendes umfasst:
gewichtete Mittelwertbildung der einer Schärfungsfilterung unterzogenen Projektionsdaten und der einer Glättungsfilterung unterzogenen Projektionsdaten in Übereinstimmung damit, ob der Strahlengang durch das Windmühlenartefaktstrahlungszentrum (48), den Halbschatten (52) oder das Feld (54) verläuft.

19. Verfahren nach Anspruch 18, wobei der Schritt der gewichteten Mittelwertbildung Folgendes umfasst:
Gewichten der mit dem Schärfungsfilter gefilterten Daten und der mit dem Glättungsfilter gefilterten Daten mit einer Rampenfunktion.

## Revendications

1. Appareil d'imagerie volumétrique comprenant:
un moyen (10) pour générer des données de projection diagnostiques d'une partie d'un sujet dans une région d'examen (14) qui peut être sujette à des artefacts en forme d'éolienne;
un moyen (40) pour déterminer des centres de rayonnement d'artefacts en forme d'éolienne (48) à partir desquels les artefacts en forme d'éolienne semblent rayonner;
un moyen (58) pour déterminer les rayons (60) qui passent à travers les centres de rayonnement d'artefacts en forme d'éolienne;
un moyen (70) pour filtrer les données de projection avec un filtre d'accentuation;
un moyen (72) pour filtrer les données de projection avec un filtre de lissage;
un moyen (74) pour pondérer sélectivement les données filtrées avec le filtre d'accentuation et les données filtrées avec le filtre de lissage conformément à une trajectoire d'un rayon correspondant aux données traversant une région d'intérêt par rapport aux centres de rayonnement d'artefacts en forme d'éolienne déterminés; et
un moyen (76) pour reconstruire les données pondérées en une représentation d'image.

2. Appareil suivant la revendication 1, dans lequel le moyen (10) générant des données de projection comprend un scanner CT qui comporte une source de rayons X (12) pour générer un faisceau de rayonnement en cône ou en coin et un détecteur bidimensionnel (16) pour générer des données CT.

3. Appareil suivant la revendication 2, comprenant en outre:
un moyen (32) pour regrouper des données provenant du détecteur de rayonnement bidimensionnel (16) en des données de projections parallèles, le moyen de filtrage d'accentuation (70) et le moyen de filtrage de lissage (72) filtrant tous deux chaque rayon des données de projections parallèles.

4. Appareil suivant la revendication 3, dans lequel les moyens de filtrage d'accentuation et de lissage (60, 62) filtrent dans une direction parallèle à un axe de rotation du scanner CT.

5. Appareil suivant la revendication 2, dans lequel le moyen (40) destiné à identifier les centres de rayonnement d'artefacts en forme d'éolienne comprend:
un filtre passe-haut (42) pour filtrer les données de projection diagnostiques;
un moyen de reconstruction (44) pour reconstruire les données filtrées passe-haut en une représentation d'image de centre d'artefact en forme d'éolienne (46) illustrant les centres de rayonnement d'artefacts en forme d'éolienne (48).

6. Appareil suivant la revendication 5, dans lequel le moyen (40) destiné à identifier les centres des artefacts en forme d'éolienne, comprend en outre:
un moyen de normalisation (56) pour normaliser la représentation d'une image de centre d'artefact en forme d'éolienne.

7. Appareil suivant la revendication 5, comprenant en outre:
un moyen de projection avant (52) pour projeter vers l'avant l'image de centre d'artefact en forme d'éolienne (46) en des valeurs de données correspondant à des trajectoires de rayons, l'amplitude de la valeur de donnée correspondant à chaque trajectoire de rayon étant indicative du fait qu'un rayon le long de la trajectoire correspondante passe à travers un des centres de rayonnement d'artefacts en forme d'éolienne (48) de la représentation d'image de centre d'artefact en forme d'éolienne (46).

8. Appareil suivant la revendication 5, dans lequel la représentation d'image de centre d'artefact en forme d'éolienne (46) représente: des centres de rayonnement d'artefacts en forme d'éolienne (48), des pénombres (52) entourant les centres d'artefacts en forme d'éolienne, et un champ d'arrière-plan (54).

9. Appareil suivant la revendication 8, dans lequel le moyen de pondération (74):
laisse passer des données du moyen à filtre de lissage (72) directement au moyen de reconstruction (76) pour des données correspondant à des trajectoires qui passent à travers un des centres de rayonnement,
laisse passer une moyenne pondérée de données du moyen à filtres d'accentuation et de lissage (70, 72) au moyen de reconstruction (76) pour des trajectoires qui passent mollement à travers un des centres de rayonnement; et
laisse passer des données du moyen à filtre d'accentuation (70) directement au moyen de reconstruction (76) pour des rayons (64) qui ne passent qu'à travers un champ (54) et pas à travers un centre.

10. Appareil suivant la revendication 1, dans lequel l'appareil est un appareil destiné à reconstruire des images diagnostiques, dans lequel le moyen pour générer des données de projection diagnostiques est un scanner CT (10) à faisceau en cône ou en coin qui génère un jeu de valeurs de données de projection indicatives de la transmission ou de l'atténuation du rayonnement le long de rayons de rayonnement qui divergent dans des directions de rotation et axiale;
dans lequel le moyen (40) pour déterminer des centres de rayonnement d'artefacts en forme d'éolienne (48) à partir desquels les artefacts en forme d'éolienne semblent rayonner est un processeur (40) qui reconstruit les valeurs de données de projection en une représentation d'image (46) indicative de points centraux (48) d'artefacts en forme d'éolienne;
dans lequel le moyen (70) pour filtrer les données de projection avec un filtre d'accentuation est un filtre augmentant la résolution (70) et dans lequel le moyen (72) pour filtrer les données de projection avec un filtre de lissage est un filtre adoucissant la résolution (72), dans lequel le filtre augmentant la résolution (70) et le filtre adoucissant la résolution (72) filtrent chacun chaque valeur de donnée de projection en parallèle afin de générer une valeur de donnée à résolution augmentée et une valeur de donnée à résolution diminuée;
dans lequel le moyen pour pondérer sélectivement les données filtrées avec le filtre d'accentuation et les données filtrées avec le filtre de lissage conformément à une trajectoire d'un rayon correspondant aux données traversant la région d'intérêt par rapport aux centres d'artefacts en forme d'éolienne déterminés est un processeur de pondération (74) destiné à combiner sélectivement la valeur de données de projection à résolution augmentée et la valeur de données de projection à résolution diminuée correspondant à un rayon commun conformément à une trajectoire du rayon commun par rapport aux centres de rayonnement d'artefact en forme d'éolienne; et
dans lequel le moyen pour reconstruire les données pondérées en une représentation d'image est un processeur de reconstruction (76) qui reconstruit les valeurs de données de projection pondérées en une représentation d'image diagnostique tridimensionnelle.

11. Procédé d'imagerie volumétrique comprenant:
la génération de données de projection diagnostiques qui peuvent être sujettes à des artefacts en forme d'éolienne;
la détermination de centres de rayonnement d'artefacts en forme d'éolienne (48) à partir desquels les artefacts en forme d'éolienne semblent rayonner;
la détermination des rayons (60) qui traversent les centres de rayonnement d'artefacts en forme d'éolienne,
le filtrage des données de projection avec un filtre d'accentuation;
le filtrage des données de projection avec un filtre de lissage;
la pondération sélective des données filtrées avec le filtre d'accentuation et des données filtrées avec le filtre de lissage conformément à une trajectoire d'un rayon correspondant aux données traversant une région d'intérêt par rapport aux centres de rayonnement d'artefacts en forme d'éolienne déterminés (48); et
la reconstruction des données pondérées en une représentation d'image.

12. Procédé suivant la revendication 11, dans lequel les données de projection sont générées par un scanner CT et en ce qu'il comprend en outre:
le regroupement des données provenant du scanner CT en des données de projections parallèles, et le filtrage des données de projections parallèles avec les filtres d'accentuation et de lissage.

13. Procédé suivant la revendication 12, dans lequel les filtres d'accentuation et de lissage filtrent dans une direction parallèle à un axe de rotation du scanner CT.

14. Procédé suivant la revendication 12, dans lequel l'identification des centres de rayonnement d'artefacts en forme d'éolienne comprend:
le filtrage passe-haut des données de projection regroupées;
la reconstruction des données filtrées passe-haut en une représentation d'image illustrant des centres de rayonnement d'artefacts en forme d'éolienne.

15. Procédé suivant la revendication 14, comprenant en outre:
la normalisation de la représentation d'image de centre en forme d'éolienne.

16. Procédé suivant la revendication 14, comprenant en outre:
la projection vers l'avant de l'image de centres d'artefacts en forme d'éolienne en des valeurs de données correspondant à des trajectoires de rayons, l'amplitude de la valeur de données correspondant à chaque trajectoire de rayon étant indicative du fait qu'un rayon le long de la trajectoire passe à travers un des centres de rayonnement d'artefacts en forme d'éolienne (48) de la représentation d'image de centres d'artefacts en forme d'éolienne (46).

17. Procédé suivant la revendication 14, dans lequel l'image de centres d'artefacts en forme d'éolienne (46) représente: des centres de rayonnement d'artefacts en forme d'éolienne (48), des pénombres (52) entourant les centres de rayonnement d'artefacts en forme d'éolienne, et un champ d'arrière-plan (54).

18. Procédé suivant la revendication 17, dans lequel l'étape de pondération comprend:
le calcul d'une moyenne pondérée des données de projection filtrées avec accentuation et des données de projection filtrées avec lissage selon que le rayon traverse le centre de rayonnement d'artefact en forme d'éolienne (48), la pénombre (52) ou le champ (54).

19. Procédé suivant la revendication 18 dans lequel l'étape de calcul de la moyenne pondérée comprend:
la pondération des données qui ont été filtrées avec le filtre d'accentuation et des données qui ont été filtrées avec le filtre de lissage avec une fonction en rampe.p h
